# EUROPEAN PATENT APPLICATION

(11) **EP 4 797 284 A1**
(43) Date of publication of application: **26.08.2026**
(21) Application number: 24895603.9
(22) Date of filing: 25.06.2024
(51) Int. Cl.: G21C 17/00, G21D 3/00

(54) **THERMAL MARGIN DETERMINATION METHOD AND APPARATUS FOR NUCLEAR REACTOR, COMPUTER DEVICE AND MEDIUM**

(30) Priority: 29.11.2023 CN 202311614954
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: HU, Yisong, Shenzhen, Guangdong 518031 (CN); ZHANG, Wei, Shenzhen, Guangdong 518031 (CN); FENG, Yingjie, Shenzhen, Guangdong 518031 (CN); LU, Xianghui, Shenzhen, Guangdong 518031 (CN); HU, Yousen, Shenzhen, Guangdong 518031 (CN); CAO, Jianhua, Shenzhen, Guangdong 518031 (CN); WANG, Weiru, Shenzhen, Guangdong 518031 (CN); LI, Kejia, Shenzhen, Guangdong 518031 (CN); CHEN, Tianming, Shenzhen, Guangdong 518031 (CN); MENG, Shuqi, Shenzhen, Guangdong 518031 (CN); MAO, Yulong, Shenzhen, Guangdong 518031 (CN)
(74) Representative: V.O.
(86) International application number: PCT/CN2024/101404
(87) International publication number: WO 2025/112500

(57) **Abstract**

A thermal margin determination method and apparatus for a nuclear reactor, a computer device and a medium. The method comprises: determining a first predicted departure from nucleate boiling ratio of a reactor under test (201), the first predicted departure from nucleate boiling ratio referring to a predicted minimum departure from nucleate boiling ratio of said reactor; according to a prediction moment corresponding to the first predicted departure from nucleate boiling ratio, determining reactor parameters of said reactor at the prediction moment (202), the reactor parameters comprising the axial power distribution and the total assembly power of at least one reactor assembly in said reactor, and the total assembly power referring to the sum of the axial power and the radial power of the reactor assembly; and, according to the reactor parameters, determining a thermal margin of said reactor (203).

## Description

### RELATED APPLICATIONS

This application claims priority to Chinese Patent Application No. 202311614954.7, entitled "Method, Apparatus, Computer Device and Medium for Determining Thermal Margin of Nuclear Reactor", filed on November 29, 2023, which is incorporated herein by reference in its entirety.

### TECHNICAL FIELD

The present application relates to the field of nuclear engineering, and in particular, to method, apparatus computer device and medium for determining thermal margin of nuclear reactor.

### BACKGROUND

With a continuous development of nuclear engineering, in order to perform safety analysis on an operating state of a reactor, a thermal margin corresponding to the reactor can be obtained by performing thermal margin analysis on the reactor. Then, safety analysis of the operating state of the reactor is realized according to a value of the thermal margin.

Currently, the thermal margin analysis can be performed on the reactor through a power distribution of a core of the reactor to obtain the thermal margin corresponding to the reactor. However, the inventor recognized that it is still difficult to accurately obtain the thermal margin of the reactor in the above manner, resulting in low accuracy of the safety analysis of the operating state of the reactor.

### SUMMARY

Various embodiments of the present application provide a method, an apparatus, a computer device and a medium for determining thermal margin of nuclear reactor.

A method for determining a thermal margin of a nuclear reactor includes:
determining a first predicted departure from nucleate boiling ratio of a reactor under test, wherein the first predicted departure from nucleate boiling ratio refers to a predicted minimum departure from nucleate boiling ratio of the reactor under test;
determining, according to a prediction moment corresponding to the first predicted departure from nucleate boiling ratio, reactor parameters of the reactor under test at the prediction moment, wherein the reactor parameters include an axial power distribution and a total assembly power of at least one reactor assembly in the reactor under test, and the total assembly power refers to a sum of an axial power and a radial power of the reactor assembly; and
determining, according to the reactor parameters, a thermal margin of the reactor under test.

In an embodiment, determining, according to the reactor parameters, the thermal margin of the reactor under test includes:
determining a target departure from nucleate boiling ratio according to the reactor parameters, wherein the target departure from nucleate boiling ratio refers to an actual minimum departure from nucleate boiling ratio of the reactor under test; and
determining the thermal margin of the reactor under test according to the target departure from nucleate boiling ratio.

In an embodiment, determining the thermal margin of the reactor under test according to the target departure from nucleate boiling ratio includes:
performing a difference operation on the target departure from nucleate boiling ratio and a preset departure from nucleate boiling ratio to obtain the thermal margin of the reactor under test.

In an embodiment, determining the target departure from nucleate boiling ratio according to the reactor parameters includes:
determining candidate departure from nucleate boiling ratios corresponding to at least one core channel according to the reactor parameters; and
taking a candidate departure from nucleate boiling ratio with a minimum value in the candidate departure from nucleate boiling ratios corresponding to the core channels as the target departure from nucleate boiling ratio.

In an embodiment, determining the first predicted departure from nucleate boiling ratio of the reactor under test includes:
determining a target working condition from candidate working conditions corresponding to the reactor under test, and determining core parameters of the target working condition; and
predicting the departure from nucleate boiling ratio of the reactor under test according to the core parameters to obtain the first predicted departure from nucleate boiling ratio of the reactor under test.

In an embodiment, according to the prediction moment corresponding to the first predicted departure from nucleate boiling ratio, determining the reactor parameters of the reactor under test at the prediction moment includes:
performing, according to the prediction moment corresponding to the first predicted departure from nucleate boiling ratio, data screening on a core physical library of the reactor under test to obtain the reactor parameters of the reactor under test at the prediction moment.

An apparatus for determining a thermal margin of a nuclear reactor includes:
a first determining module configured to determine a first predicted departure from nucleate boiling ratio of a reactor under test, wherein the first predicted departure from nucleate boiling ratio refers to a predicted minimum departure from nucleate boiling ratio of the reactor under test;
a second determining module configured to determine, according to a prediction moment corresponding to the first predicted departure from nucleate boiling ratio, reactor parameters of the reactor under test at the prediction moment, wherein the reactor parameters include an axial power distribution and a total assembly power of at least one reactor assembly in the reactor under test, and the total assembly power refers to a sum of an axial power and a radial power of the reactor assembly; and
a third determining module configured to determine, according to the reactor parameters, a thermal margin of the reactor under test.

In an embodiment, the third determining module includes a first determining unit and a second determining unit;
the first determining unit is configured to determine a target departure from nucleate boiling ratio according to the reactor parameters, wherein the target departure from nucleate boiling ratio refers to an actual minimum departure from nucleate boiling ratio of the reactor under test; and
the second determining unit is configured to determine the thermal margin of the reactor under test according to the target departure from nucleate boiling ratio.

In an embodiment, the second determining unit is further configured to:
perform a difference operation on the target departure from nucleate boiling ratio and a preset departure from nucleate boiling ratio to obtain the thermal margin of the reactor under test.

In an embodiment, the first determining unit includes a first determining subunit and a second determining subunit;
the first determining subunit is configured to determine candidate departure from nucleate boiling ratios corresponding to at least one core channel according to the reactor parameters; and
the second determining subunit is configured to take a candidate departure from nucleate boiling ratio with a minimum value in the candidate departure from nucleate boiling ratios corresponding to the core channels as the target departure from nucleate boiling ratio.

In an embodiment, the first determining module includes a third determining unit and a fourth determining unit;
the third determining unit is configured to determine a target working condition from candidate working conditions corresponding to the reactor under test, and determine core parameters of the target working condition; and
the fourth determining unit is configured to predict the departure from nucleate boiling ratio of the reactor under test according to the core parameters to obtain the first predicted departure from nucleate boiling ratio of the reactor under test.

In an embodiment, the second determining module is further configured to:
perform, according to the prediction moment corresponding to the first predicted departure from nucleate boiling ratio, data screening on a core physical library of the reactor under test to obtain the reactor parameters of the reactor under test at the prediction moment.

A computer device includes a memory and one or more processors, the memory having computer readable instructions stored therein, and the computer readable instructions, when executed by the one or more processors, causing the one or more processors to perform the steps of the method for determining the thermal margin of the nuclear reactor according to any one of the embodiments of the present application.

One or more computer storage media storing computer readable instructions are provided, the computer readable instructions, when executed by one or more processors, implementing the steps of the method for determining the thermal margin of the nuclear reactor according to any one of the embodiments of the present application.

One or more computer program products storing computer programs are provided, the computer programs, when executed by one or more processors, implementing the steps of the method for determining the thermal margin of the nuclear reactor according to any one of the embodiments of the present application.

Details of one or more embodiments of the present application are set forth in the accompanying drawings and the description below. Other features and advantages of the present application will be apparent from the description, the accompanying drawings, and the claims.

### BRIEF DESCRIPTION OF THE DRAWINGS

In order to illustrate the technical solutions in the embodiments of the present application more clearly, the drawings required in the embodiments will be described briefly. Apparently, the following described drawings are merely for some embodiments of the present application, and other drawings can be derived from these drawings by those of ordinary skill in the art without any creative effort.
FIG. 1 is a view of an application environment of a thermal margin determination method for a nuclear reactor according to one or more embodiments;
FIG. 2 is a flowchart of the method for determining a thermal margin of a nuclear reactor according to one or more embodiments;
FIG. 3 is a flowchart of steps for determining a thermal margin of a reactor under test in one or more embodiments;
FIG. 4 is a flowchart of steps for determining a target departure from nucleate boiling ratio in one or more embodiments;
FIG. 5 is a flowchart of steps for determining a first predicted departure from nucleate boiling ratio in one or more embodiments;
FIG. 6 is a flowchart of the method for determining the thermal margin of the nuclear reactor according to one or more embodiments;
FIG. 7 is a structural block diagram of a first apparatus for determining a thermal margin of a nuclear reactor according to one or more embodiments;
FIG. 8 is a structural block diagram of a second apparatus for determining a thermal margin of a nuclear reactor according to one or more embodiments;
FIG. 9 is a structural block diagram of a third apparatus for determining a thermal margin of a nuclear reactor according to one or more embodiments;
FIG. 10 is a structural block diagram of a fourth apparatus for determining a thermal margin of a nuclear reactor according to one or more embodiments; and
FIG. 11 is an internal structure diagram of a computer device according to one or more embodiments.

### DETAILED DESCRIPTION

The technical solutions in the embodiments of the present application are clearly and completely described with reference to the accompanying drawings in the embodiments of the present application, and apparently, the described embodiments are not all but only a part of the embodiments of the present application. All other embodiments obtained by a person of ordinary skill in the art based on the embodiments of the present application without creative efforts shall fall within the protection scope of the present application.

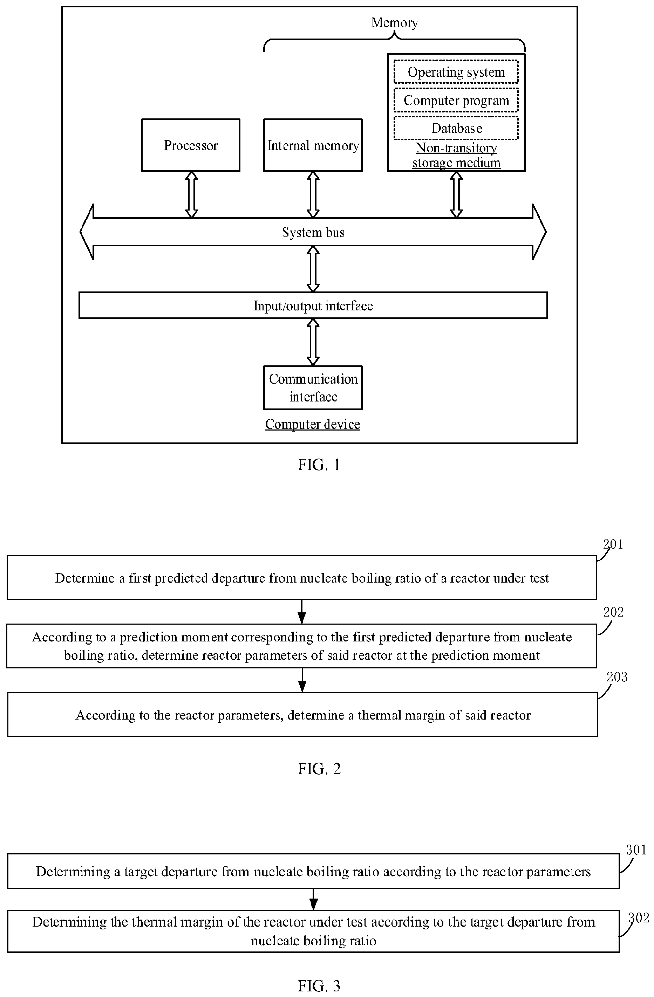

Based on the above, a method for determining a thermal margin of a nuclear reactor according to an embodiment of the present application can be applied to an application environment shown in FIG. 1. In an embodiment, there is provided a computer device, which may be a server, an internal structure diagram of which may be shown in FIG. 1. The computer device includes a processor, a memory, and a network interface connected by a system bus. The processor of the computer device is configured to provide computing and control capabilities. The memory of the computer device includes a non-transitory storage medium and an internal memory. The non-transitory storage medium stores an operating system, a computer program, and a data block. The internal memory provides an environment for running of the operating system and the computer program in the non-transitory storage medium. The data block of the computer device is configured to store data acquired in the method for determining the thermal margin of the nuclear reactor. The network interface of the computer device is configured to be communicated with an external terminal through a network connection. The computer program is executed by the processor to implement the method for determining the thermal margin of the nuclear reactor.

The present application discloses a method, apparatus, a computer device and a medium for determining a thermal margin. A first predicted departure from nucleate boiling ratio of a reactor under test is determined, and according to a prediction moment corresponding to the first predicted departure from nucleate boiling ratio, reactor parameters of the reactor under test at the prediction moment are determined, and according to the reactor parameters, a thermal margin of the reactor under test is determined.

An exemplary embodiment provides a method for determining a thermal margin of a nuclear reactor, as shown in FIG. 2 which is a flowchart of the method for determining the thermal margin of the nuclear reactor according to the embodiment of the present application, the description is given with the method applied to the computer device in FIG. 1 as an example, and the method includes the following steps 201 to 203.

Step 201: determining a first predicted departure from nucleate boiling ratio of a reactor under test.

The first predicted departure from nucleate boiling ratio refers to a predicted minimum departure from nucleate boiling ratio of the reactor under test.

It should be noted that the computer device may determine the first predicted departure from nucleate boiling ratio of the reactor under test through a pre-trained departure from nucleate boiling ratio prediction model.

Specifically, when the first predicted departure from nucleate boiling ratio of the reactor under test needs to be determined, the computer device can input core parameters of the reactor under test under each candidate working condition into the departure from nucleate boiling ratio prediction model, and obtain an output result of the departure from nucleate boiling ratio prediction model, the output result being the first predicted departure from nucleate boiling ratio predicted by the departure from nucleate boiling ratio prediction model.

A training process of the departure from nucleate boiling ratio prediction model includes: the computer device acquires sample parameters under sample working conditions, a worker marks first predicted departure from nucleate boiling ratios on the sample parameters, and the computer device trains a departure from nucleate boiling ratio prediction model according to the sample parameters marked with the first predicted departure from nucleate boiling ratios to obtain the trained departure from nucleate boiling ratio prediction model.

Further, when the first predicted departure from nucleate boiling ratio of the reactor under test needs to be determined, the computer device can also select a target working condition when an accident occurs from candidate working conditions of a core of the reactor under test, and then, the computer device acquires core parameters under the target working condition and determines a critical departure from nucleate boiling heat flux and an actual heat flux; the computer device takes a ratio of the critical departure from nucleate boiling heat flux to the actual heat flux as the first predicted departure from nucleate boiling ratio.

Step 202: determining, according to a prediction moment corresponding to the first predicted departure from nucleate boiling ratio, reactor parameters of the reactor under test at the prediction moment.

The reactor parameters include an axial power distribution and a total assembly power of at least one reactor assembly in the reactor under test, and the total assembly power refers to a sum of an axial power and a radial power of the reactor assembly.

It should be noted that, when the reactor parameters of the reactor under test at the prediction moment need to be determined, the following content may be included: the computer device performs data screening on a core physical library of the reactor under test according to the prediction moment corresponding to the first predicted departure from nucleate boiling ratio to obtain the reactor parameters of the reactor under test at the prediction moment, i.e., the axial power distribution and the total assembly power of the at least one reactor assembly in the reactor under test.

Further, when data screening needs to be performed on the core physical library of the reactor under test, the computer device may obtain the reactor parameters of the reactor under test at the prediction moment through keyword screening, numerical value screening, category screening, or the like, and a manner of performing the data screening on the core physical library of the reactor under test is not limited herein.

In an embodiment of the present application, in order to further improve accuracy of a thermal margin, the reactor parameters may further include a radial power distribution of the at least one reactor assembly in the reactor under test, so that an influence of the radial power distribution of each reactor assembly on the thermal margin is subsequently considered in the process of determining the thermal margin according to the reactor parameters, and correspondingly, when the reactor parameters of the reactor under test at the prediction moment need to be determined, the following content may be included: the computer device performs data screening on the core physical library of the reactor under test according to the prediction moment corresponding to the first predicted departure from nucleate boiling ratio to obtain the reactor parameters of the reactor under test at the prediction moment, i.e., the axial power distribution, the radial power distribution and the total assembly power of the at least one reactor assembly in the reactor under test.

Step 203: determining, according to the reactor parameters, the thermal margin of the reactor under test.

The thermal margin refers to a margin by which the reactor under test can keep operating, and is used for representing a safety performance of the reactor under test, and further, the lower the thermal margin, the worse the safety performance and a thermal performance of the reactor under test, and the higher the thermal margin, the better the safety performance and the thermal performance of the reactor under test.

It should be noted that, since the first predicted departure from nucleate boiling ratio refers to the predicted minimum departure from nucleate boiling ratio of the reactor under test, the computer device cannot accurately determine the thermal margin of the reactor under test according to the first predicted departure from nucleate boiling ratio; therefore, the computer device can determine a target departure from nucleate boiling ratio of the reactor under test according to the reactor parameter corresponding to the first predicted departure from nucleate boiling ratio, the target departure from nucleate boiling ratio referring to an actual minimum departure from nucleate boiling ratio of the reactor under test; therefore, when the thermal margin of the reactor under test needs to be determined, the following content can be included: the computer device determines the target departure from nucleate boiling ratio according to the reactor parameters, and then determines the thermal margin of the reactor under test according to the target departure from nucleate boiling ratio.

In an embodiment of the present application, the computer device may determine candidate departure from nucleate boiling ratios corresponding to at least one core channel according to the reactor parameters (i.e., the axial power distribution and the total assembly power of the at least one reactor assembly in the reactor under test), and take a candidate departure from nucleate boiling ratio with a minimum value in the candidate departure from nucleate boiling ratios corresponding to the core channels as the target departure from nucleate boiling ratio, and then, the computer device performs a difference operation on the target departure from nucleate boiling ratio and a preset departure from nucleate boiling ratio to obtain the thermal margin of the reactor under test.

The computer device can input the reactor parameters into a pre-trained first analysis model to acquire an output result of the first analysis model, the output result being the candidate departure from nucleate boiling ratios corresponding to the at least one core channel; further, the first analysis model can be trained according to sample reactor parameters and sample departure from nucleate boiling ratios corresponding to the sample reactor parameters.

Further, in order to further improve accuracy of the determination of the target departure from nucleate boiling ratio, an influence of the core parameters on the determination of the target departure from nucleate boiling ratio may be considered in the process of determining the target departure from nucleate boiling ratio, and therefore, when the thermal margin of the reactor under test needs to be determined, the following content may be included: the computer device determines the target departure from nucleate boiling ratio according to the reactor parameters and the core parameters, and then determines the thermal margin of the reactor under test according to the target departure from nucleate boiling ratio.

In an embodiment of the present application, the computer device may determine the candidate departure from nucleate boiling ratios corresponding to the at least one core channel according to the reactor parameters (i.e., the axial power distribution and the total assembly power of the at least one reactor assembly in the reactor under test) and the core parameters (such as a core inlet temperature, pressure, flow rate and power), and take the candidate departure from nucleate boiling ratio with a minimum value in the candidate departure from nucleate boiling ratios corresponding to the core channels as the target departure from nucleate boiling ratio, and then, the computer device performs the difference operation on the target departure from nucleate boiling ratio and the preset departure from nucleate boiling ratio to obtain the thermal margin of the reactor under test.

The computer device can input the reactor parameters and the core parameters into a pre-trained second analysis model to acquire an output result of the second analysis model, the output result being the candidate departure from nucleate boiling ratios corresponding to the at least one core channel; further, the second analysis model can be trained according to the sample reactor parameters, sample core parameters and the sample departure from nucleate boiling ratios corresponding to the sample reactor parameters.

In the above method for determining the thermal margin of the nuclear reactor, the reactor parameters of the reactor under test at the prediction moment are determined through the prediction moment of the first predicted departure from nucleate boiling ratio, and further, the thermal margin of the reactor under test is determined according to the reactor parameters. Since the reactor parameters in the above process include the axial power distribution and the total assembly power of the at least one reactor assembly in the reactor under test, and the total assembly power refers to the sum of the axial power and the radial power of the reactor assembly, compared with the current process of determining the thermal margin only according to a core power distribution, in the present application, when the thermal margin is determined, influences of the axial power and the radial power of each assembly on the determination of the thermal margin are considered, and therefore, factors influencing the thermal margin are considered more comprehensively, a calculation granularity is finer, accuracy of the thermal margin is improved, and the thermal margin can more accurately reflect actual conditions of the reactor under test.

In order to ensure the safety performance of the reactor, the thermal margin of the reactor is calculated by the core power distribution at present, which has the problem of low accuracy. In order to solve the above technical problem, the computer device in the present application may determine the thermal margin of the reactor under test in a manner shown in FIG. 3, which includes the following steps 301 and 302.

Step 301: determining a target departure from nucleate boiling ratio according to the reactor parameters.

The target departure from nucleate boiling ratio refers to an actual minimum departure from nucleate boiling ratio of the reactor under test.

In an embodiment of the present application, if the reactor parameters are the axial power distribution and the total assembly power of the at least one reactor assembly in the reactor under test, when the target departure from nucleate boiling ratio needs to be determined, the following content may be included: the computer device inputs the axial power distribution and the total assembly power of the at least one reactor assembly in the reactor under test into a reactor calculation model X to obtain an output result of the reactor calculation model X, i.e., the target departure from nucleate boiling ratio.

Further, a training process of the reactor calculation model X may include the following content: the computer device sets sample axial power distributions of reactor assemblies, sample total assembly powers and sample target departure from nucleate boiling ratios, and inputs the sample axial power distributions of the reactor assemblies, the sample total assembly powers and the sample target departure from nucleate boiling ratios into a reactor calculation model X to train the reactor calculation model X, so as to obtain the trained reactor calculation model X.

In another embodiment of the present application, if the reactor parameters are the axial power distribution, the radial power distribution and the total assembly power of the at least one reactor assembly in the reactor under test, when the target departure from nucleate boiling ratio needs to be determined, the following content may be included: the computer device inputs the radial power distribution and the total assembly power of the at least one reactor assembly in the reactor under test into a reactor calculation model Y to obtain an output result of the reactor calculation model Y, i.e., the target departure from nucleate boiling ratio.

Further, a training process of the reactor calculation model Y may include the following content: the computer device sets the sample axial power distributions of the reactor assemblies, sample radial power distributions of the reactor assemblies, the sample total assembly powers and the sample target departure from nucleate boiling ratios, and inputs the sample axial power distributions of the reactor assemblies, the sample radial power distributions of the reactor assemblies, the sample total assembly powers and the sample target departure from nucleate boiling ratios into a reactor calculation model Y to train the reactor calculation model Y, so as to obtain the trained reactor calculation model Y.

Step 302: determining the thermal margin of the reactor under test according to the target departure from nucleate boiling ratio.

It should be noted that, when the thermal margin of the reactor under test needs to be determined, the following content may be included: the computer device performs a difference operation on the target departure from nucleate boiling ratio and a preset departure from nucleate boiling ratio to obtain the thermal margin of the reactor under test.

The preset departure from nucleate boiling ratio is determined according to historical work experience of workers and actual conditions of the reactor.

In an embodiment of the present application, if the target departure from nucleate boiling ratio is A and the preset departure from nucleate boiling ratio is B, the computer device performs the difference operation on the target departure from nucleate boiling ratio and the preset departure from nucleate boiling ratio, and the result is A-B, i.e., the thermal margin of the reactor under test.

In the above method for determining the thermal margin of the nuclear reactor, by considering influences of the axial power and the radial power included in the reactor parameters on the determination of the thermal margin, the factors influencing the thermal margin are considered more comprehensively, the calculation granularity is finer, the accuracy of the thermal margin is improved, and the thermal margin can more accurately reflect the actual conditions of the reactor under test.

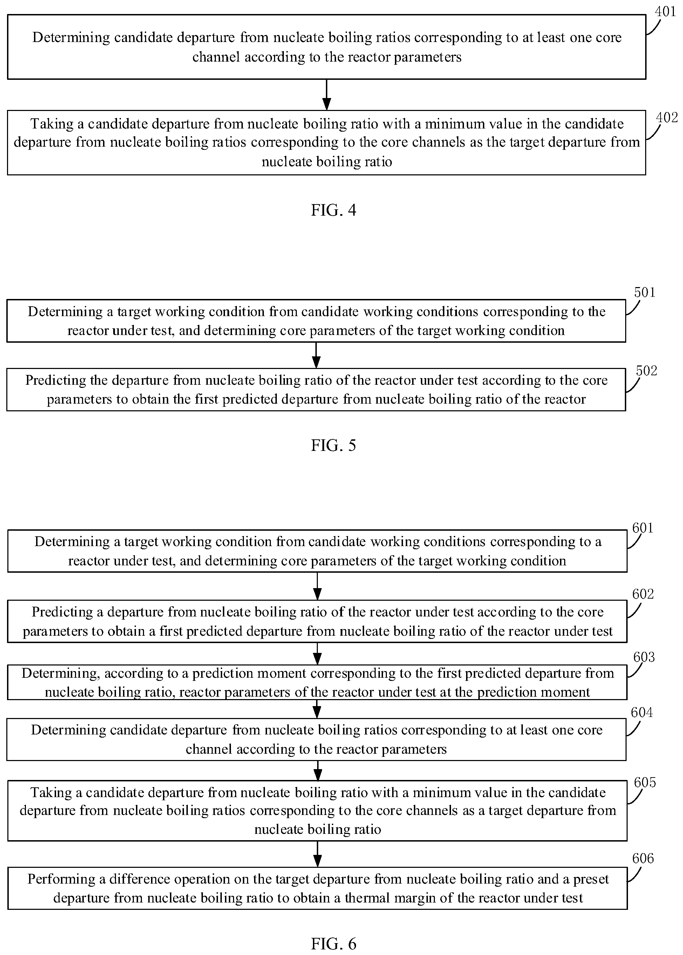

In an exemplary embodiment, when the target departure from nucleate boiling ratio needs to be determined according to the reactor parameters, the manner shown in FIG. 4 may be adopted and includes the following steps 401 and 402.

Step 401: determining candidate departure from nucleate boiling ratios corresponding to at least one core channel according to the reactor parameters.

The candidate departure from nucleate boiling ratios refer to departure from nucleate boiling ratios corresponding to different core channels.

It should be noted that, since the reactor under test is composed of a plurality of assemblies, in order to ensure that the obtained target departure from nucleate boiling ratio can more accurately reflect the actual condition of the reactor under test, the computer device needs to divide the plurality of assemblies included in the reactor under test into the at least one core channel, and then, determines the candidate departure from nucleate boiling ratio corresponding to each core channel.

In an embodiment of the present application, when the candidate departure from nucleate boiling ratios corresponding to the at least one core channel need to be determined, the following content may be included: the computer device inputs the reactor parameters into a core channel model, and the reactor under test is subjected to division and calculation through the core channel model to obtain an output result of the core channel model, i.e., the candidate departure from nucleate boiling ratios corresponding to the at least one core channel.

Further, a training process of the core channel model may include the following content: the computer device sets the sample reactor parameters and sample candidate departure from nucleate boiling ratios, and inputs the sample reactor parameters and the sample candidate departure from nucleate boiling ratios into a core channel model to train the core channel model, so as to obtain the trained core channel model.

Step 402: taking a candidate departure from nucleate boiling ratio with a minimum value in the candidate departure from nucleate boiling ratios corresponding to the core channels as the target departure from nucleate boiling ratio.

It should be noted that, when the target departure from nucleate boiling ratio is determined, the computer device needs to sort the candidate departure from nucleate boiling ratios corresponding to the core channels in an ascending order, the first candidate departure from nucleate boiling ratio after sorting is the candidate departure from nucleate boiling ratio with a minimum value in the candidate departure from nucleate boiling ratios corresponding to the core channels, and the computer device takes this candidate departure from nucleate boiling ratio as the target departure from nucleate boiling ratio.

For example, if a first candidate departure from nucleate boiling ratio is a, a second candidate departure from nucleate boiling ratio is b, a third candidate departure from nucleate boiling ratio is c, and b<a<c, since the second candidate departure from nucleate boiling ratio is minimum, the second candidate departure from nucleate boiling ratio is taken as the target departure from nucleate boiling ratio.

In the above method for determining the thermal margin of the nuclear reactor, the candidate departure from nucleate boiling ratios corresponding to the at least one core channel are obtained through the reactor parameters, and a candidate heat flux with a minimum value is selected as the target departure from nucleate boiling ratio, so as to provide a calculation basis for subsequent determination of the thermal margin of the reactor under test.

In an exemplary embodiment, when the first predicted departure from nucleate boiling ratio of the reactor under test needs to be determined, the manner shown in FIG. 5 may be adopted and includes the following steps 501 and 502.

Step 501: determining a target working condition from candidate working conditions corresponding to the reactor under test, and determining core parameters of the target working condition.

The candidate working condition refers to any possible operating working condition of the reactor under test in an operating state; the target working condition refers to an operating working condition of the reactor under test when an accident occurs in the operating state, for example, a design basis condition1-2 (DBC1-2) type working condition, a design basis condition3-4 (DBC3-4) type working condition, or the like; the core parameters refer to core thermal state parameters (such as a core inlet temperature, pressure, flow rate and power) of the reactor under test at an accident starting moment under the target working condition, and an accident starting event (such as a rod drop accident).

It should be noted that, when the target working condition needs to be determined from the candidate working conditions corresponding to the reactor under test, the computer device may screen the candidate working conditions corresponding to the reactor under test, and select the operating working condition of the reactor under test when the accident occurs in the operating state, i.e., the target working condition corresponding to the reactor under test, from the candidate working conditions.

In an embodiment of the present application, when the target working condition needs to be determined from the candidate working conditions corresponding to the reactor under test, and the core parameters of the target working condition need to be determined, the computer device may screen the candidate working conditions through a working condition screening model to obtain the target working condition, and further, the computer device may perform detection analysis on the reactor under test through a detection device pre-arranged in the core under test to obtain the core parameters, wherein the detection device may include a temperature detection device, a pressure detection device, a flow rate detection device, or the like.

Further, a training process of the working condition screening model may include the following content: the computer device sets sample candidate working conditions and sample target working conditions, and inputs the sample candidate working conditions and the sample target working conditions into a working condition screening model to train the working condition screening model, so as to obtain the trained working condition screening model.

Step 502: predicting the departure from nucleate boiling ratio of the reactor under test according to the core parameters to obtain the first predicted departure from nucleate boiling ratio of the reactor under test.

In an embodiment of the present application, when the departure from nucleate boiling ratio of the reactor under test needs to be predicted according to the core parameters, so as to obtain the first predicted departure from nucleate boiling ratio of the reactor under test, the computer device may input the core parameters into a core calculation model, and prediction calculation is performed on the reactor under test through the core calculation model to obtain a result of the core calculation model, i.e., the first predicted departure from nucleate boiling ratio of the reactor under test.

Further, a training process of the core calculation model may include the following content: the computer device sets sample core parameters and sample first predicted departure from nucleate boiling ratios, and inputs the sample core parameters and the sample first predicted departure from nucleate boiling ratios into a core calculation model to train the core calculation model, so as to obtain the trained core calculation model.

In the above method for determining the thermal margin of the nuclear reactor, the departure from nucleate boiling ratio of the reactor under test is predicted according to the core parameters of the target working condition to obtain the first predicted departure from nucleate boiling ratio of the reactor under test, so as to provide a basis for subsequent determination of the thermal margin of the reactor under test.

In an embodiment of the present application, when the reactor parameters of the reactor under test at the prediction moment need to be determined, the computer device may perform data screening on the core physical library of the reactor under test according to the prediction moment corresponding to the first predicted departure from nucleate boiling ratio, so as to obtain the reactor parameters of the reactor under test at the prediction moment.

The core physical library is used for storing physical characteristics of the reactor under test such as the assembly power distributions (including the assembly axial power distribution and the assembly radial power distribution), and the total assembly power (the sum of the axial power and the radial power of the assemblies).

In the above method for determining the thermal margin of the nuclear reactor, the reactor parameters of the reactor under test at the prediction moment are obtained from the core physical library of the reactor under test, so as to provide a basis for subsequent determination of the thermal margin of the reactor under test.

In an exemplary embodiment, when each data block to be stored needs to be stored, the following process may be included, as shown in FIG. 6.

Step 601: determining a target working condition from candidate working conditions corresponding to a reactor under test, and determining core parameters of the target working condition.

Step 602: predicting a departure from nucleate boiling ratio of the reactor under test according to the core parameters to obtain a first predicted departure from nucleate boiling ratio of the reactor under test.

Step 603: determining, according to a prediction moment corresponding to the first predicted departure from nucleate boiling ratio, reactor parameters of the reactor under test at the prediction moment.

Step 604: determining candidate departure from nucleate boiling ratios corresponding to at least one core channel according to the reactor parameters.

Step 605: taking a candidate departure from nucleate boiling ratio with a minimum value in the candidate departure from nucleate boiling ratios corresponding to the core channels as a target departure from nucleate boiling ratio.

Step 606: performing a difference operation on the target departure from nucleate boiling ratio and a preset departure from nucleate boiling ratio to obtain a thermal margin of the reactor under test.

In the above method for determining the thermal margin of the nuclear reactor, the reactor parameters of the reactor under test at the prediction moment are determined through the prediction moment of the first predicted departure from nucleate boiling ratio, and further, the thermal margin of the reactor under test is determined according to the reactor parameters. Since the reactor parameters in the above process include the axial power distribution and the total assembly power of the at least one reactor assembly in the reactor under test, and the total assembly power refers to the sum of the axial power and the radial power of the reactor assembly, compared with the current process of determining the thermal margin only according to a core power distribution, in the present application, when the thermal margin is determined, influences of the axial power and the radial power of each assembly on the determination of the thermal margin are considered, and therefore, factors influencing the thermal margin are considered more comprehensively, a calculation granularity is finer, accuracy of the thermal margin is improved, and the thermal margin can more accurately reflect actual conditions of the reactor under test.

It should be understood that, although the steps in the flow charts of FIG. 2, FIG. 3, FIG. 4, FIG. 5 and FIG. 6 are shown in sequence as indicated by the arrows, the steps are not necessarily performed in sequence as indicated by the arrows. Unless explicitly stated herein, the steps are not limited to being performed in the exact order and may be performed in other orders. At least part of the steps in FIG. 2, FIG. 3, FIG. 4, FIG. 5 and FIG. 6 may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same inventive concept, embodiments of the present application further provide an apparatus for determining a thermal margin of a nuclear reactor for implementing the above thermal margin determination method for a nuclear reactor. The implementation solution for solving problems provided by the apparatus is similar to the implementation solution described in the above method, and therefore, for the definitions in one or more embodiments of the apparatus for determining the thermal margin of the nuclear reactor provided below, reference can be made to the definitions of the apparatus for determining the thermal margin of the nuclear reactor in the above description, and the definitions are not repeated herein.

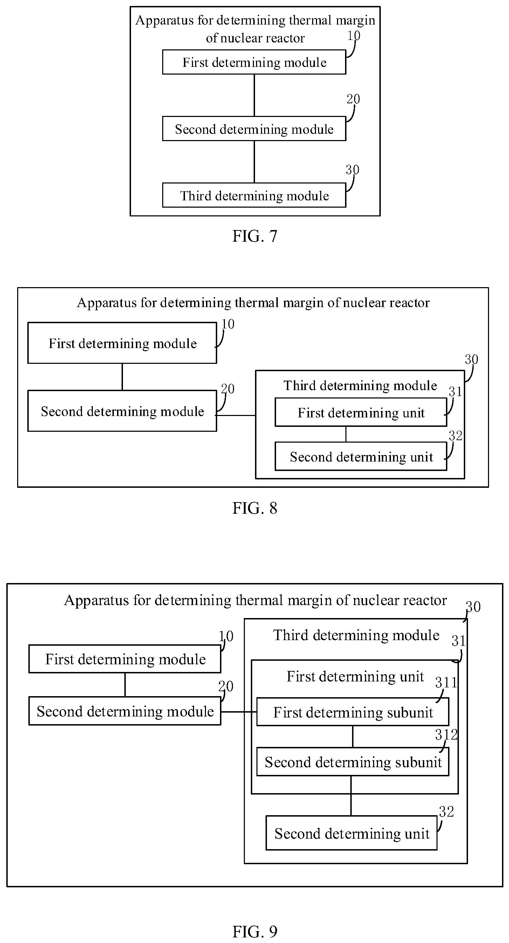

In an embodiment, as shown in FIG. 7, there is provided an apparatus for determining a thermal margin of a nuclear reactor, including a first determining module 10, a second determining module 20 and a third determining module 30.

The first determining module 10 is configured to determine a first predicted departure from nucleate boiling ratio of a reactor under test.

The second determining module 20 is configured to determine, according to a prediction moment corresponding to the first predicted departure from nucleate boiling ratio, reactor parameters of the reactor under test at the prediction moment, wherein the reactor parameters include an axial power distribution and a total assembly power of at least one reactor assembly in the reactor under test, and the total assembly power refers to a sum of an axial power and a radial power of the reactor assembly.

The second determining module 20 is specifically configured to perform, according to the prediction moment corresponding to the first predicted departure from nucleate boiling ratio, data screening on a core physical library of the reactor under test to obtain the reactor parameters of the reactor under test at the prediction moment.

The third determining module 30 is configured to determine, according to the reactor parameters, a thermal margin of the reactor under test.

In the above apparatus for determining the thermal margin of the nuclear reactor, the reactor parameters of the reactor under test at the prediction moment are determined through the prediction moment of the first predicted departure from nucleate boiling ratio, and further, the thermal margin of the reactor under test is determined according to the reactor parameters. Since the reactor parameters in the above process include the axial power distribution and the total assembly power of the at least one reactor assembly in the reactor under test, and the total assembly power refers to the sum of the axial power and the radial power of the reactor assembly, compared with the current process of determining the thermal margin only according to a core power distribution, in the present application, when the thermal margin is determined, influences of the axial power and the radial power of each assembly on the determination of the thermal margin are considered, and therefore, factors influencing the thermal margin are considered more comprehensively, a calculation granularity is finer, accuracy of the thermal margin is improved, and the thermal margin can more accurately reflect actual conditions of the reactor under test.

In an embodiment, as shown in FIG. 8, there is provided an apparatus for determining a thermal margin of a nuclear reactor, in which the third determining module 30 includes a first determining unit 31 and a second determining unit 32.

The first determining unit 31 is configured to determine a target departure from nucleate boiling ratio according to the reactor parameters, wherein the target departure from nucleate boiling ratio refers to an actual minimum departure from nucleate boiling ratio of the reactor under test.

The second determining unit 32 is configured to determine the thermal margin of the reactor under test according to the target departure from nucleate boiling ratio.

The second determining unit 32 is specifically configured to perform a difference operation on the target departure from nucleate boiling ratio and a preset departure from nucleate boiling ratio to obtain the thermal margin of the reactor under test.

In an embodiment, as shown in FIG. 9, there is provided an apparatus for determining a thermal margin of a nuclear reactor, in which the first determining unit 31 includes a first determining subunit 311 and a second determining subunit 312.

The first determining subunit 311 is configured to determine candidate departure from nucleate boiling ratios corresponding to at least one core channel according to the reactor parameters.

The second determining subunit 312 is configured to take a candidate departure from nucleate boiling ratio with a minimum value in the candidate departure from nucleate boiling ratios corresponding to the core channels as the target departure from nucleate boiling ratio.

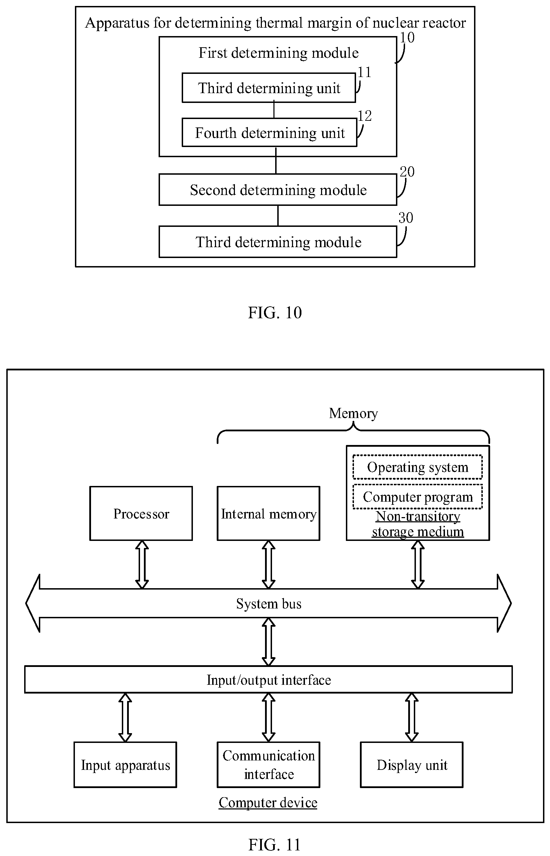

In an embodiment, as shown in FIG. 10, there is provided an apparatus for determining a thermal margin of a nuclear reactor, in which the first determining module 10 includes a third determining unit 11 and a fourth determining unit 12.

The third determining unit 11 is configured to determine a target working condition from candidate working conditions corresponding to the reactor under test, and determine core parameters of the target working condition.

The fourth determining unit 12 is configured to predict the departure from nucleate boiling ratio of the reactor under test according to the core parameters to obtain the first predicted departure from nucleate boiling ratio of the reactor under test.

The modules in the above apparatus for determining the thermal margin of the nuclear reactor may be wholly or partially implemented by software, hardware and a combination thereof. The modules may be embedded in or independent of a processor in a computer device in hardware, or may be stored in a memory in the computer device in software, such that the processor can conveniently call the modules to execute the operations corresponding to the modules.

In an embodiment, there is provided a computer device, which may be a terminal, an internal structure diagram of which may be shown in FIG. 11. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-transitory storage medium and an internal memory. The non-transitory storage medium stores an operating system and a computer program. The internal memory provides an environment for running of the operating system and the computer program in the non-transitory storage medium. The input/output interface of the computer device is configured to exchange information between the processor and an external device. The communication interface of the computer device is configured to be communicated with an external terminal in a wired or wireless mode, and the wireless mode can be implemented through WIFI, a mobile cellular network, NFC (near field communication), or other technologies. The computer program is executed by the processor to implement a method for determining a thermal margin of a nuclear reactor. The display unit of the computer device is configured to form a visually visible picture and can be a display screen, a projection apparatus, or a virtual reality imaging apparatus. The display screen may be a liquid crystal display screen or an electronic ink display screen, and the input apparatus of the computer device may be a touch layer covering the display screen, or may be a key, a trackball or a touch pad arranged on a casing of the computer device, or may be an external keyboard, touch pad, mouse, or the like.

Those skilled in the art will appreciate that the structure shown in FIG. 11 is only a block diagram of a part of the structure associated with the application solution and does not constitute a limitation on the computer device to which the application solution is applied, and a particular computer device may include more or fewer components than shown components, or combine certain components, or have a different arrangement of components.

An embodiment provides a computer device, including a memory and a processor, the memory storing a computer program, and the processor, when executing the computer program, implementing the following steps: determining a first predicted departure from nucleate boiling ratio of a reactor under test, wherein the first predicted departure from nucleate boiling ratio refers to a predicted minimum departure from nucleate boiling ratio of the reactor under test; determining, according to a prediction moment corresponding to the first predicted departure from nucleate boiling ratio, reactor parameters of the reactor under test at the prediction moment, wherein the reactor parameters include an axial power distribution and a total assembly power of at least one reactor assembly in the reactor under test, and the total assembly power refers to a sum of an axial power and a radial power of the reactor assembly; and determining, according to the reactor parameters, a thermal margin of the reactor under test.

In an embodiment, the processor, when executing the computer program, further implements the following steps: determining a target departure from nucleate boiling ratio according to the reactor parameters, wherein the target departure from nucleate boiling ratio refers to an actual minimum departure from nucleate boiling ratio of the reactor under test; and determining the thermal margin of the reactor under test according to the target departure from nucleate boiling ratio.

In an embodiment, the processor, when executing the computer program, further implements the following step: performing a difference operation on the target departure from nucleate boiling ratio and a preset departure from nucleate boiling ratio to obtain the thermal margin of the reactor under test.

In an embodiment, the processor, when executing the computer program, further implements the following steps: determining candidate departure from nucleate boiling ratios corresponding to at least one core channel according to the reactor parameters; and taking a candidate departure from nucleate boiling ratio with a minimum value in the candidate departure from nucleate boiling ratios corresponding to the core channels as the target departure from nucleate boiling ratio.

In an embodiment, the processor, when executing the computer program, further implements the following steps: determining a target working condition from candidate working conditions corresponding to the reactor under test, and determining core parameters of the target working condition; and predicting the departure from nucleate boiling ratio of the reactor under test according to the core parameters to obtain the first predicted departure from nucleate boiling ratio of the reactor under test.

In an embodiment, the processor, when executing the computer program, further implements the following step: performing, according to the prediction moment corresponding to the first predicted departure from nucleate boiling ratio, data screening on a core physical library of the reactor under test to obtain the reactor parameters of the reactor under test at the prediction moment.

An embodiment provides a computer-readable storage medium having a computer program stored thereon, the computer program, when executed by a processor, implementing the following steps: determining a first predicted departure from nucleate boiling ratio of a reactor under test, wherein the first predicted departure from nucleate boiling ratio refers to a predicted minimum departure from nucleate boiling ratio of the reactor under test; determining, according to a prediction moment corresponding to the first predicted departure from nucleate boiling ratio, reactor parameters of the reactor under test at the prediction moment, wherein the reactor parameters include an axial power distribution and a total assembly power of at least one reactor assembly in the reactor under test, and the total assembly power refers to a sum of an axial power and a radial power of the reactor assembly; and determining, according to the reactor parameters, a thermal margin of the reactor under test.

In an embodiment, the computer program, when executed by the processor, further implements the following steps: determining a target departure from nucleate boiling ratio according to the reactor parameters, wherein the target departure from nucleate boiling ratio refers to an actual minimum departure from nucleate boiling ratio of the reactor under test; and determining the thermal margin of the reactor under test according to the target departure from nucleate boiling ratio.

In an embodiment, the computer program, when executed by the processor, further implements the following step: performing a difference operation on the target departure from nucleate boiling ratio and a preset departure from nucleate boiling ratio to obtain the thermal margin of the reactor under test.

In an embodiment, the computer program, when executed by the processor, further implements the following steps: determining candidate departure from nucleate boiling ratios corresponding to at least one core channel according to the reactor parameters; and taking a candidate departure from nucleate boiling ratio with a minimum value in the candidate departure from nucleate boiling ratios corresponding to the core channels as the target departure from nucleate boiling ratio.

In an embodiment, the computer program, when executed by the processor, further implements the following steps: determining a target working condition from candidate working conditions corresponding to the reactor under test, and determining core parameters of the target working condition; and predicting the departure from nucleate boiling ratio of the reactor under test according to the core parameters to obtain the first predicted departure from nucleate boiling ratio of the reactor under test.

In an embodiment, the computer program, when executed by the processor, further implements the following step: performing, according to the prediction moment corresponding to the first predicted departure from nucleate boiling ratio, data screening on a core physical library of the reactor under test to obtain the reactor parameters of the reactor under test at the prediction moment.

An embodiment provides a computer program product including a computer program, the computer program, when executed by a processor, implementing the following steps: determining a first predicted departure from nucleate boiling ratio of a reactor under test, wherein the first predicted departure from nucleate boiling ratio refers to a predicted minimum departure from nucleate boiling ratio of the reactor under test; determining, according to a prediction moment corresponding to the first predicted departure from nucleate boiling ratio, reactor parameters of the reactor under test at the prediction moment, wherein the reactor parameters include an axial power distribution and a total assembly power of at least one reactor assembly in the reactor under test, and the total assembly power refers to a sum of an axial power and a radial power of the reactor assembly; and determining, according to the reactor parameters, a thermal margin of the reactor under test.

In an embodiment, the computer program, when executed by the processor, further implements the following steps: determining a target departure from nucleate boiling ratio according to the reactor parameters, wherein the target departure from nucleate boiling ratio refers to an actual minimum departure from nucleate boiling ratio of the reactor under test; and determining the thermal margin of the reactor under test according to the target departure from nucleate boiling ratio.

In an embodiment, the computer program, when executed by the processor, further implements the following step: performing a difference operation on the target departure from nucleate boiling ratio and a preset departure from nucleate boiling ratio to obtain the thermal margin of the reactor under test.

In an embodiment, the computer program, when executed by the processor, further implements the following steps: determining candidate departure from nucleate boiling ratios corresponding to at least one core channel according to the reactor parameters; and taking a candidate departure from nucleate boiling ratio with a minimum value in the candidate departure from nucleate boiling ratios corresponding to the core channels as the target departure from nucleate boiling ratio.

In an embodiment, the computer program, when executed by the processor, further implements the following steps: determining a target working condition from candidate working conditions corresponding to the reactor under test, and determining core parameters of the target working condition; and predicting the departure from nucleate boiling ratio of the reactor under test according to the core parameters to obtain the first predicted departure from nucleate boiling ratio of the reactor under test.

In an embodiment, the computer program, when executed by the processor, further implements the following step: performing, according to the prediction moment corresponding to the first predicted departure from nucleate boiling ratio, data screening on a core physical library of the reactor under test to obtain the reactor parameters of the reactor under test at the prediction moment.

It should be noted that user information (including but not limited to user device information, user personal information, or the like) and data (including but not limited to data for analysis, stored data, displayed data, or the like) involved in the present application are information and data authorized by the user or sufficiently authorized by each party, and collection, use and processing of relevant data require compliance with relevant laws, regulations and standards in relevant countries and regions.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, data blocks or other media used in the embodiments of the present application can include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, or the like. The transitory memory can include a random access memory (RAM), an external cache memory, or the like. By way of illustration and not limitation, the RAM can take many forms such as a static random access memory (SRAM) and a dynamic random access memory (DRAM). The data blocks involved in the embodiments of the present application may include at least one of relational and non-relational data blocks. The non-relational data block may include, but is not limited to, a block chain-based distributed data block, or the like. The processors referred to in the embodiments of the present application may include, but are not limited to, general processors, central processors, graphics processors, digital signal processors, programmable logic units, data processing logic units based on quantum calculations, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A method for determining a thermal margin of a nuclear reactor, **characterized by** comprising:
determining a first predicted departure from nucleate boiling ratio of a reactor under test, wherein the first predicted departure from nucleate boiling ratio refers to a predicted minimum departure from nucleate boiling ratio of the reactor under test;
determining, according to a prediction moment corresponding to the first predicted departure from nucleate boiling ratio, reactor parameters of the reactor under test at the prediction moment, wherein the reactor parameters comprise an axial power distribution and a total assembly power of at least one reactor assembly in the reactor under test, and the total assembly power refers to a sum of an axial power and a radial power of the reactor assembly; and
determining, according to the reactor parameters, a thermal margin of the reactor under test.

2. The method according to claim 1, **characterized in that**, determining, according to the reactor parameters, the thermal margin of the reactor under test comprises:
determining a target departure from nucleate boiling ratio according to the reactor parameters, wherein the target departure from nucleate boiling ratio refers to an actual minimum departure from nucleate boiling ratio of the reactor under test; and
determining the thermal margin of the reactor under test according to the target departure from nucleate boiling ratio.

3. The method according to claim 2, **characterized in that**, determining the thermal margin of the reactor under test according to the target departure from nucleate boiling ratio comprises:
performing a difference operation on the target departure from nucleate boiling ratio and a preset departure from nucleate boiling ratio to obtain the thermal margin of the reactor under test.

4. The method according to claim 2, **characterized in that**, determining the target departure from nucleate boiling ratio according to the reactor parameters comprises:
determining candidate departure from nucleate boiling ratios corresponding to at least one core channel according to the reactor parameters; and
taking a candidate departure from nucleate boiling ratio with a minimum value in the candidate departure from nucleate boiling ratios corresponding to the core channels as the target departure from nucleate boiling ratio.

5. The method according to claim 1, **characterized in that**, determining the first predicted departure from nucleate boiling ratio of the reactor under test comprises:
determining a target working condition from candidate working conditions corresponding to the reactor under test, and determining core parameters of the target working condition; and
predicting the departure from nucleate boiling ratio of the reactor under test according to the core parameters to obtain the first predicted departure from nucleate boiling ratio of the reactor under test.

6. The method according to claim 1, **characterized in that**, determining, according to the prediction moment corresponding to the first predicted departure from nucleate boiling ratio, the reactor parameters of the reactor under test at the prediction moment comprises:
performing, according to the prediction moment corresponding to the first predicted departure from nucleate boiling ratio, data screening on a core physical library of the reactor under test to obtain the reactor parameters of the reactor under test at the prediction moment.

7. An apparatus for determining a thermal margin of a nuclear reactor, **characterized by** comprising:
a first determining module configured to determine a first predicted departure from nucleate boiling ratio of a reactor under test, wherein the first predicted departure from nucleate boiling ratio refers to a predicted minimum departure from nucleate boiling ratio of the reactor under test;
a second determining module configured to determine, according to a prediction moment corresponding to the first predicted departure from nucleate boiling ratio, reactor parameters of the reactor under test at the prediction moment, wherein the reactor parameters comprise an axial power distribution and a total assembly power of at least one reactor assembly in the reactor under test, and the total assembly power refers to a sum of an axial power and a radial power of the reactor assembly; and
a third determining module configured to determine, according to the reactor parameters, a thermal margin of the reactor under test.

8. The apparatus according to claim 7, **characterized in that**, the third determining module comprises a first determining unit and a second determining unit;
the first determining unit is configured to determine a target departure from nucleate boiling ratio according to the reactor parameters, wherein the target departure from nucleate boiling ratio refers to an actual minimum departure from nucleate boiling ratio of the reactor under test; and
the second determining unit is configured to determine the thermal margin of the reactor under test according to the target departure from nucleate boiling ratio.

9. The apparatus according to claim 8, **characterized in that**, the second determining unit is further configured to:
perform a difference operation on the target departure from nucleate boiling ratio and a preset departure from nucleate boiling ratio to obtain the thermal margin of the reactor under test.

10. The apparatus according to claim 8, **characterized in that**, the first determining unit comprises a first determining subunit and a second determining subunit;
the first determining subunit is configured to determine candidate departure from nucleate boiling ratios corresponding to at least one core channel according to the reactor parameters; and
the second determining subunit is configured to take a candidate departure from nucleate boiling ratio with a minimum value in the candidate departure from nucleate boiling ratios corresponding to the core channels as the target departure from nucleate boiling ratio.

11. The apparatus according to claim 7, **characterized in that**, the first determining module comprises a third determining unit and a fourth determining unit;
the third determining unit is configured to determine a target working condition from candidate working conditions corresponding to the reactor under test, and determine core parameters of the target working condition; and
the fourth determining unit is configured to predict the departure from nucleate boiling ratio of the reactor under test according to the core parameters to obtain the first predicted departure from nucleate boiling ratio of the reactor under test.

12. The apparatus according to claim 7, **characterized in that**, the second determining module is further configured to:
perform, according to the prediction moment corresponding to the first predicted departure from nucleate boiling ratio, data screening on a core physical library of the reactor under test to obtain the reactor parameters of the reactor under test at the prediction moment.

13. A computer device comprising a memory and one or more processors, the memory having computer readable instructions stored therein, and the computer readable instructions, when executed by the one or more processors, causing the one or more processors to perform the following steps:
determining a first predicted departure from nucleate boiling ratio of a reactor under test, wherein the first predicted departure from nucleate boiling ratio refers to a predicted minimum departure from nucleate boiling ratio of the reactor under test;
determining, according to a prediction moment corresponding to the first predicted departure from nucleate boiling ratio, reactor parameters of the reactor under test at the prediction moment, wherein the reactor parameters comprise an axial power distribution and a total assembly power of at least one reactor assembly in the reactor under test, and the total assembly power refers to a sum of an axial power and a radial power of the reactor assembly; and
determining, according to the reactor parameters, a thermal margin of the reactor under test.

14. One or more computer storage media storing computer readable instructions, the computer readable instructions, when executed by one or more processors, causing the one or more processors to perform the following steps:
determining a first predicted departure from nucleate boiling ratio of a reactor under test, wherein the first predicted departure from nucleate boiling ratio refers to a predicted minimum departure from nucleate boiling ratio of the reactor under test;
determining, according to a prediction moment corresponding to the first predicted departure from nucleate boiling ratio, reactor parameters of the reactor under test at the prediction moment, wherein the reactor parameters comprise an axial power distribution and a total assembly power of at least one reactor assembly in the reactor under test, and the total assembly power refers to a sum of an axial power and a radial power of the reactor assembly; and
determining, according to the reactor parameters, a thermal margin of the reactor under test.

15. A computer program product comprising a computer program which **characterized in that**, when executed by one or more processors, causes the one or more processors to perform the following steps:
determining a first predicted departure from nucleate boiling ratio of a reactor under test, wherein the first predicted departure from nucleate boiling ratio refers to a predicted minimum departure from nucleate boiling ratio of the reactor under test;
determining, according to a prediction moment corresponding to the first predicted departure from nucleate boiling ratio, reactor parameters of the reactor under test at the prediction moment, wherein the reactor parameters comprise an axial power distribution and a total assembly power of a reactor assembly in the reactor under test, and the total assembly power refers to a sum of an axial power and a radial power of the reactor assembly; and
determining, according to the reactor parameters, a thermal margin of the reactor under test.
